# EUROPÄISCHE PATENTSCHRIFT

(11) **EP 4 204 254 B1**
(45) Veröffentlichungstag und Bekanntmachung des Hinweises auf die Patenterteilung: **26.06.2024**
(21) Anmeldenummer: 21765719.6
(22) Anmeldetag: 30.08.2021
(51) Int. Cl.: B60M 1/26, B60M 1/30

(54) **VORRICHTUNG ZUM AUSGLEICHEN EINER LÄNGENÄNDERUNG EINER STROMSCHIENE**
DEVICE FOR COMPENSATING FOR A CHANGE IN LENGTH OF A CONDUCTOR RAIL
DISPOSITIF POUR COMPENSER UNE MODIFICATION DE LONGUEUR D'UN RAIL CONDUCTEUR

(30) Priorität: 28.08.2020 CN 202010884380
(43) Veröffentlichungstag der Anmeldung: 05.07.2023
(60) Teilanmeldung: 23175876.4
(73) Patentinhaber: Furrer + Frey AG, 3000 Bern 6 (CH)
(72) Erfinder: FURRER, Beat, 3012 Bern (CH); LIN, Xirong, Guangzhou, Guangdong 510620 (CN); WANG, Beiwei, Guangzhou, Guangdong 510620 (CN)
(74) Vertreter: von Bülow & Tamada
(86) Internationale Anmeldenummer: PCT/IB2021/057903
(87) Internationale Veröffentlichungsnummer: WO 2022/043954

(56) Entgegenhaltungen:
- EP-A1- 3 159 205
- EP-A1- 3 260 326
- EP-B1- 1 436 163
- EP-B1- 2 691 256

## Beschreibung

Die vorliegende Erfindung betrifft eine Vorrichtung zum Ausgleichen einer Längenänderung einer Stromschiene.

Eine Vorrichtung gemäß dem Oberbegriff des Anspruchs 1 ist aus der EP 3 260 326 A1 bekannt.

Aufgabe der Erfindung ist es, die bekannte Vorrichtung zu verbessern.

Die Aufgabe wird durch die Merkmale des unabhängigen Anspruchs gelöst. Bevorzugte Weiterbildungen sind Gegenstand der abhängigen Ansprüche.

Gemäß der Erfindung, umfasst eine Vorrichtung zum Ausgleichen einer Längenänderung einer sich in einer Fahrtrichtung eines Schienenfahrzeuges erstreckenden Stromschiene, die sich aus einem in der Fahrtrichtung gesehenen vorderen Stromschienenteil und einem in der Fahrtrichtung gesehenen hinteren Stromschienenteil hinter dem vorderen Stromschienenteil zusammensetzt einen mit dem vorderen Stromschienenteil verbindbaren ersten Schlitten mit einer Führungsschlitzseite, in der ein sich in der Längsrichtung erstreckender Führungsschlitz ausgebildet ist, und einen mit dem hinteren Stromschienenteil verbindbaren und in einer Querrichtung rechtwinklig zur Fahrtrichtung gesehen neben dem ersten Schlitten angeordneten zweiten Schlitten mit einer an die Führungsschlitzseite des ersten Schlittens angelegten Führungsschlitzseite, wobei in der Führungsschlitzseite des zweiten Schlittens ebenfalls ein sich in der Führungsrichtung erstreckender Führungsschlitz ausgebildet ist, und wobei sich in der Fahrtrichtung gesehen hinter dem Führungsschlitz des ersten Schlittens ein hinteres Formschlusselement und vor dem Führungsschlitz des zweiten Schlittens ein vorderes Formschlusselement anschließt, die in der Querrichtung formschlüssig in den Führungsschlitz des jeweils anderen Schlittens eingreifen.

Gegenüber der eingangs genannten Vorrichtung liegt der angegebenen Vorrichtung die Überlegung zugrunde, dass sich die beiden Schlitten ausreichend weit auseinandergezogen voneinander lösen können. Um dies zu vermeiden, werden die Formschlusselemente nicht nur zum Formschluss in der Querrichtung sondern auch zum gegenseitigen Formschluss in der Fahrtrichtung genutzt. Auf diese Weise wird der relative Bewegungsweg der beiden Schlitten zueinander beschränkt und ein unbeabsichtigtes Lösen voneinander wirksam vermieden.

In einer Weiterbildung der angegebenen Vorrichtung sind die Formschlusselemente in der Längsrichtung gesehen an gegenüberliegenden Enden der Schlitten angeordnet. Auf diese Weise ist der maximale Weg zum Längenänderungsausgleich verfügbar, bevor die beiden Schlitten aneinander anschlagen.

In einer anderen Weiterbildung der angegebenen Vorrichtung sind die Formschlusselemente als in den Führungsschlitzen in Querrichtung formschlüssig gehaltene Kulissenelemente ausgeführt. Auf diese Weise können die Formschlusselemente unabhängig vom Rest der Schlitten gefertigt werden, ohne dass Hinterschnitte aufwändige Herstellungsverfahren notwendig machen.

In einer besonderen Weiterbildung der angegebenen Vorrichtung ist das hintere Kulissenelement im Führungsschlitz des ersten Schlitten und das vordere Kulissenelement im Führungsschlitz des zweiten Schlittens in der Längsrichtung unbeweglich gehalten. Dies kann in stoffschlüssiger Weise beispielsweise durch Verschweißen oder Verkleben, in reibschlüssiger Weise beispielsweise durch Verkeilen, in formschlüssiger Weise beispielsweise durch einen Blockerpin oder einer Kombination daraus erreicht werden.

In einer bevorzugten Weiterbildung der angegebenen Vorrichtung besitzt das Kulissenelement einen Doppel-T-Profilquerschnitt. Auf diese Weise lassen sich die beiden Schlitten einheitlich in symmetrischer Weise zueinander aufbauen, wodurch sich Herstellungskosten senken lassen.

In einer noch anderen Weiterbildung der angegebenen Vorrichtung ist an jedem Schlitten der Führungsschlitze ein Formschlussbereich zum Formschluss mit dem Formschlusselement des jeweils anderen Schlittens vorhanden, wobei jeder Formschlussbereich in der Längsrichtung gesehen eine Unterbrechung aufweist. Auf diese Weise wird eine Öffnung geschaffen, über die sich in den Führungsschlitzen ansammelnde Verunreinigungen abtransportieren lassen.

In einer zusätzlichen Weiterbildung der angegebenen Vorrichtung ist in jedem Schlitten der Führungsschlitz im Bereich der Unterbrechung entgegen einer Höhenrichtung quer zur Querrichtung und quer zur Fahrtrichtung vertieft. Auf diese Weise kann sich ein verbleibender Rest der ansammelnden Verunreinigungen unterhalb der Gleitbahnen der Formschlusselemente ansammeln und stört so die Gleitführung nicht.

In einer besonders bevorzugten Weiterbildung der angegebenen Vorrichtung ist die Unterbrechung in jedem Schlitten kürzer, als das in den entsprechenden Führungsschlitz eingreifende Formschlusselement um ein unbeabsichtigtes Lösen des Formschlusselementes vom jeweils anderen Schlitten zu vermeiden.

In einer weiteren Weiterbildung der angegebenen Vorrichtung sind die Formschlusselemente in den Führungsschlitzen gleitend gelagert. Auf diese Weise wird die Vorrichtung wartungsarm, robust und kostengünstig zur Verfügung gestellt.

In einer noch weiteren Weiterbildung der angegebenen Vorrichtung umfasst jeder Schlitten in einer Höhenrichtung quer zur Fahrtrichtung und quer zur Querrichtung übereinander angeordnet zwei der Führungsschlitze und zwei der Formschlusselemente.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Darstellung eines Gleisabschnittes für ein Schienenfahrzeug mit einer Stromschiene und einer Vorrichtung zum Ausgleichen einer Längenänderung der Stromschiene,
Fig. 2 eine perspektivische Ansicht der Stromschiene aus Fig. 1,
Fig. 3 eine perspektivische Ansicht eines Schlittens für die Vorrichtung zum Ausgleichen der Längenänderung der Stromschiene aus Fig. 1,
Fig. 4 eine perspektivische Ansicht eines Kulissensteins für die Vorrichtung zum Ausgleichen der Längenänderung der Stromschiene aus Fig. 1.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

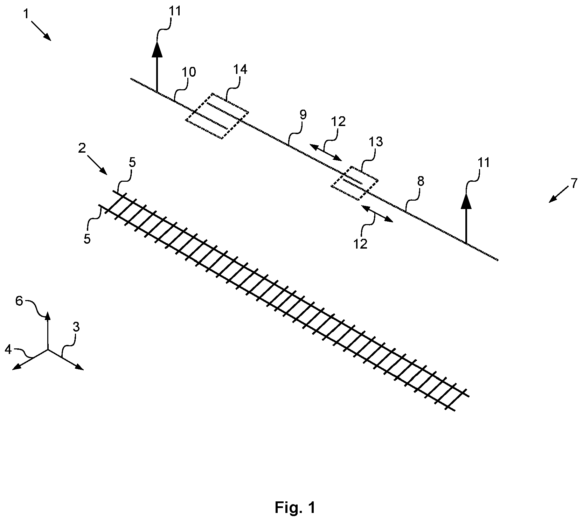

Es wird auf Fig. 1 Bezug genommen, die eine schematische Darstellung eines Gleisabschnittes 1 für ein nicht weiter zu sehendes Schienenfahrzeug zeigt. Der Gleisabschnitt 1 umfasst ein Gleis 2, das sich in und entgegen einer Fahrtrichtung 3 (auch Längsrichtung genannt) des Schienenfahrzeuges erstreckt und in einer Querrichtung 4 rechtwinklig zur Fahrtrichtung 3 gesehen zwei parallel nebeneinander laufende Fahrschienen 5 umfasst.

Rechtwinklig zur Fahrtrichtung 3 und rechtwinklig zur Querrichtung 4 gesehen erstreckt sich in einer Höhenrichtung 6 gesehen über dem Gleis 2 eine Stromschiene 7, die sich entgegen der Fahrtrichtung 3 gesehen aneinandergereiht aus einem ersten Stromschienenteil 8, einem zweiten Stromschienenteil 9 und einem dritten Stromschienenteil 10 zusammensetzt.

Das Schienenfahrzeug fährt somit geführt durch das Gleis 2 in oder entgegen der Fahrtrichtung 3 und entnimmt die zum Antrieb notwendige elektrische Energie über einen Pantographen aus der Stromschiene 7. Hierzu sind das erste Stromschienenteil 8 und das dritte Stromschienenteil 10 an eine elektrische Energieversorgung 11 angeschlossen.

Die einzelnen Stromschienenteile 8, 9 und 10 der Stromschiene 7 unterliegen Längenänderungen aufgrund von Temperaturschwankungen, die in Fig. 1 mit dem Bezugszeichen 12 referenziert sind. Zum Ausgleichen dieser Längenänderungen 12 umfasst die Stromschiene 7 eine Vorrichtung 13, auf die später im Detail eingegangen wird. An der Stelle der Vorrichtung 13 zum Ausgleichen der Längenänderungen 12 sind die Stromschienenteile 8, 9 funktionsbedingt elektrisch voneinander getrennt, um den Ausgleich der Längenänderungen 12 mit wenig mechanischen Belastungen zu ermöglichen. Grundsätzlich könnten die beiden Stromschienenteile 8, 9 an dieser Stelle allerdings elektrischen Strom zwischeneinander übergeben.

Dies ist im Falle eines Streckentrenners 14, der in Fig. 1 in Fahrtrichtung 3 gesehen vor der Vorrichtungen 13 zum Ausgleich der Längenänderungen 12 angeordnet ist, nicht der Fall. Dieser ist vorhanden, um beispielsweise für Wartungs- und Reparatureinsätze einen Bereich der Stromschiene 7 stromlos zu schalten und die Sicherheit des Personals in diesem Bereich zu gewährleisten. An der Stelle dürfen die beteiligen Stromschienenteile 9, 10 daher keinen elektrischen Strom zwischeneinander führen.

Wenn eine eigene elektrische Energieversorgung 11 für den zweiten Stromschienenteil 9 vermieden werden soll, muss die elektrische Energieübertragung daher an der Stelle der Vorrichtung 13 zum Ausgleich der Längenänderung stattfinden, worauf ebenfalls an späterer Stelle im Detail eingegangen wird.

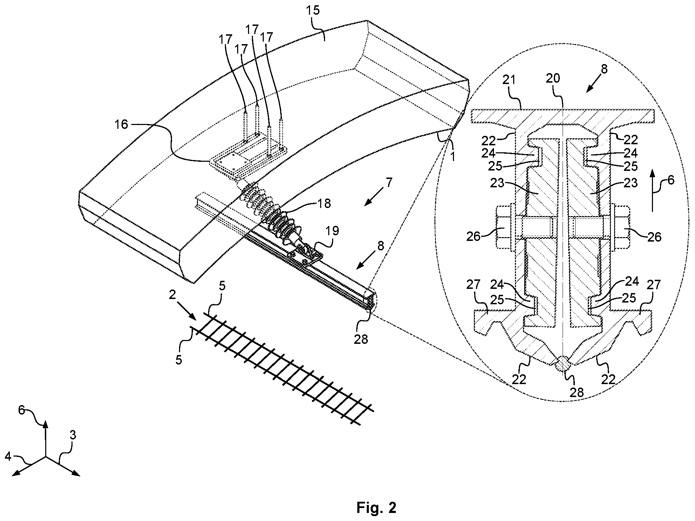

Zuvor soll allerdings anhand von Fig. 2 der Aufbau der Stromschiene 7 anhand des ersten Stromschienenteils 8 im Detail erläutert werden.

Die Stromschiene 7 ist an einem Träger 15, hier beispielhaft als Tunneldecke ausgeführt, aufgehängt. Die Aufhängung am Träger 15 erfolgt hier beispielhaft über eine Trägerplatte 16, die mittels Schwerlastankern 17 am Träger 15 gehalten ist. In der Höhenrichtung 6 gesehen schließt sich unterhalb der Trägerplatte 16 ein Langstabisolator 18 an, an dessen dem Träger 15 gegenüberliegenden Ende sich eine weitere Trägerplatte 19 anschließt, an der wiederum das zu beschreibende Stromschienenteil 8 gehalten ist. Die Befestigung einer Stromschiene an einem Träger ist bestens bekannt und kann beispielsweise in der WO 2019 / 097 325 A1 im Detail eingesehen werden. Auf eine nähere Beschreibung wird daher der Kürze halber verzichtet.

Das in Fig. 2 diskutierte Stromschienenteil 8 ist, wie die anderen Stromschienenteile 9, 10 aufgebaut und bezüglich einer sich in der Höhenrichtung 6 erstreckenden Symmetrieebene 20 symmetrisch ausgebildet. In der Höhenrichtung 6 gesehen an der Oberseite besitzt das Stromschienenteil 8 einen Querarm 21, an den sich entgegen der Höhenrichtung 6 verlaufend Spannarme 22 anschließen. Auf die Spannarme 22 lassen sich an ihren aufeinander zu gewendeten Seiten Stoßlaschen 23 aufsetzen, um einzelne Stromschienenteile in der Höhenrichtung 6 exakt aufeinander auszurichten.

Diese Ausrichtung kann durch einen in der Höhenrichtung 6 wirkenden Formschluss beispielsweise mittels Federn 24 und Nuten 25 unterstützt werden. Zur dauerhaften Befestigung sind die Stoßlaschen 23 mittels Schrauben 26 an die Spannarme 22 angeschraubt. Die Ausrichtungsunterstützung mittels Federn 24 und Nuten 25 ist in DE 20 2004 009 420 U1 beschrieben und kann dort im Detail eingesehen werden.

An einer dem Querarm 21 gegenüberliegenden Seite der Spannarme 22 weist jeder Spannarm 22 eine Fahrstraße 27 auf, auf der sich ein nicht weiter gezeigtes Montagefahrzeug bewegen kann, welches die Spannarme 22 zum Einsetzen eines die elektrische Energie für das Schienenfahrzeug führenden Fahrdrahtes 28 auseinanderzieht. Im montierten Zustand wird der Fahrdraht 28 dann von zwei Klemmarmen 29 kraft- und formschlüssig gehalten, die von den Spannarmen 22 aufeinander zu gerichtet zum Fahrdraht 28 hin verlaufen.

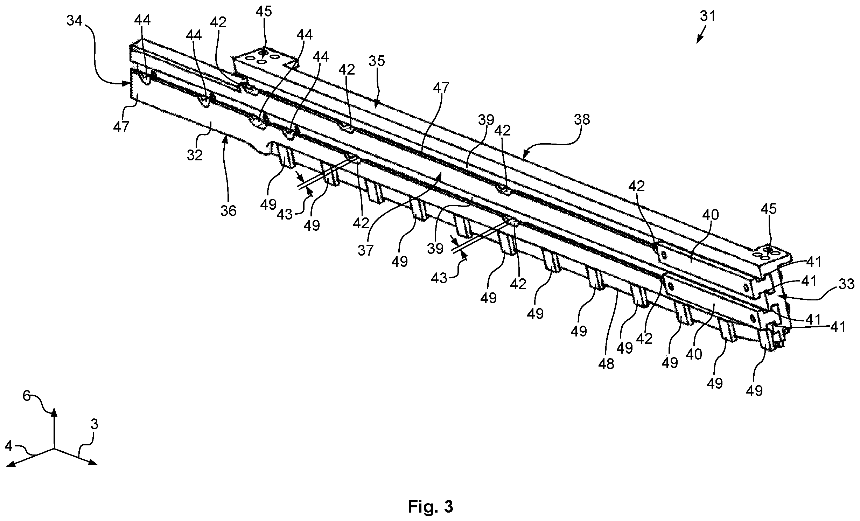

An das in Fig. 2 gezeigte Stromschienenteil 8 schließt sich die in Fig. 1 schematisch angedeutete Vorrichtung 13 zum Ausgleichen der Längenänderungen 12 der Stromschiene 7 an. Diese wird nachstehend anhand Fig. 3 bis 6 im Einzelnen erläutert.

Die Vorrichtung 13 besitzt einen ersten Schlitten 30 und zum ersten Schlitten 30 gleich aufgebauten zweiten Schlitten 31, die in den Figs. 6 bis 8 beide zu sehen sind. In Fig. 3 ist der zweite Schlitten 31 isoliert abgebildet und wird nachstehend beispielhaft für beide Schlitten 30, 31 näher erläutert.

Der zweite Schlitten 31 besitzt einen Schlittengrundkörper 32, der in der Fahrtrichtung 3 gesehen durch eine vordere Stirnseite 33 und eine der gegenüberliegende hintere Stirnseite 34 begrenzt ist. In der Höhenrichtung 6 ist der Schlittengrundkörper 32 durch eine Deckseite 35 und eine der Deckseite 35 gegenüberliegenden Grundseite 36 begrenzt. In der Querrichtung 4 ist der Schlittengrundkörper 32 durch eine Kontaktseite 37 und eine der Kontaktseite 37 gegenüberliegende Außenseite 38 begrenzt.

In die Kontaktseite 37 des Schlittengrundkörpers 32 sind zwei Führungsschlitze 39 eingeformt, die sich in der Fahrtrichtung 3 erstrecken. Jeder Führungsschlitz 39 ist zur hinteren Stirnseite 34 hin geöffnet und zur vorderen Stirnseite 33 hin verschlossen, wobei im Bereich dieses Verschlusses von der Kontaktseite 37 in der Querrichtung 4 ein Formschlusselement 40 abragt. Grundsätzlich kann dieses Formschlusselement 40 einstückig mit dem Schlittengrundkörper 32 ausgebildet sein. Allerdings ist das Formschlusselement 40 in der vorliegenden Ausführung als eigenständiger Kullissenstein ausgeführt, der sowohl den Führungsschlitz 39 des einen Schlittens 31 als auch in den Führungsschlitz 30 des anderen Schlittens 30 einführbar ist. Hierauf wird an späterer Stelle näher eingegangen. Das Formschlusselement 40 wird daher im Weiteren als Kulissenstein 40 bezeichnet.

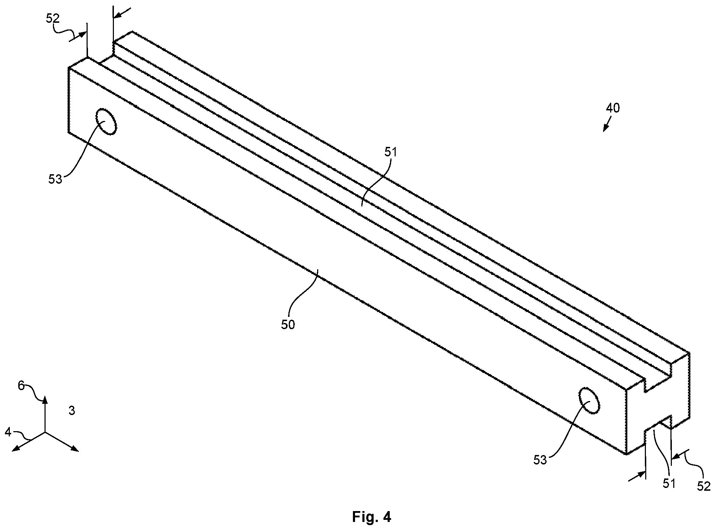

Jeder Führungsschlitz 39 ist T-Nut-förmig aufgebaut. Das heißt, dass an der Öffnung jedes Führungsschlitzes 39 zwei in der Höhenrichtung 6 aufeinander zu gerichtete Führungswände 41 ausgebildet sind, die den Kulissenstein 40 in und entgegen der Querrichtung 4 formschlüssig im Führungsschlitz 39 führen können. Die in der Höhenrichtung 6 gesehenen unteren Führungswände 41 jedes Führungsschlitzes 39 weisen dabei Reinigungsunterbrechungen 42 auf. Wird der Kulissenstein 40 durch den Führungsschlitz 39 geschoben und schiebt vor sich Fremdkörper her, dann können diese Fremdkörper den Führungsschlitz 39 über die Reinigungsunterbrechungen 42 verlassen. Um diese Reinigungswirkung weiter zu verbessern, können die Führungsschlitze 39 im Bereich der Reinigungsunterbrechungen 42 entgegen der Höhenrichtung 6 eine Reinigungsvertiefung 43 aufweisen, die in Fig. 4 der Übersichtlichkeit halber nicht an allen Reinigungsunterbrechungen 42 mit einem Bezugszeichen angedeutet ist. Durch die Reinigungsunterbrechungen 42 ist sichergestellt, dass Verunreinigungen den Gleitweg des Kulissensteins 40 im Führungsschlitz 39 in der zusammengesetzten Vorrichtung 13 nicht verkürzen. Neben den Reinigungsunterbrechungen 42 können die Führungswände 41 auch Befestigungsunterbrechungen 44 aufweisen, über die sich in die Führungsschlitze 39 einfach Befestigungsmittel wie Schrauben einführen lassen.

Im Bereich der hinteren Stirnseite 34 ist der Schlittengrundkörper 32 als Stutzen 47 aufgeführt, der sich wie die in Fig. 2 gezeigten Stoßlaschen 23 zwischen die Spannarme 22 einschieben lässt, um die Vorrichtung 13 an einen der Stromschienenteile 8, 9, 10 zu befestigen. An der Grundseite 36 besitzt der Schlittengrundkörper 32 eine Montagewand 48. An die Montagewand 48 lassen sich Klammern 49 anschrauben, zwischen die sich der Fahrdraht 28 einklemmen lässt. Die Klammern 49 haben damit die gleiche Funktion, wie die Klemmarme 22 in Fig. 2. Von den Klammern 49 sind in Fig. 3 der Übersichtlichkeit halber nicht alle mit einem Bezugszeichen versehen.

Nachstehend wird anhand Fig. 4 der Kulissenstein 40 erläutert, der einen sich in der Fahrtrichtung 3 erstreckenden Kulissensteingrundkörper 50 besitzt.

In den Kulissensteingrundkörper 50 sind an der in der Höhenrichtung 6 gesehenen Oberseite und Unterseite je eine in der Fahrtrichtung 3 verlaufende Nut 51 eingeformt. Jede Nut 51 besitzt eine Nutbreite 52, die derart gewählt ist, dass in der Nut 51 von jedem Schlitten 30, 31 je eine Führungswand 41 jedes Schlittens 30, 31 nebeneinander aufgenommen werden kann, so dass beide Führungswände 41 in der Nut möglichst wenig Toleranzspiel in der Querrichtung haben.

Zwischen den Nuten 51 durchdringen den Kulissensteingrundkörper 50 mittig zwei Befestigungsbohrungen 53, die optional mit je einem nicht weiter gezeigten Innengewinde ausgeführt sein können. In diese Befestigungsbohrungen 53 lässt sich zur Befestigung des Kulissensteins 40 in den Führungsschlitzen 39 ein Befestigungsmittel wie beispielsweise eine Schraube einsetzen.

## Patentansprüche

1. Vorrichtung (13) zum Ausgleichen einer Längenänderung (12) einer sich in einer Fahrtrichtung (3) eines Schienenfahrzeuges erstreckenden Stromschiene (7), die sich aus einem in der Fahrtrichtung gesehenen vorderen Stromschienenteil (8) und einem in der Fahrtrichtung gesehenen hinteren Stromschienenteil (9) hinter dem vorderen Stromschienenteil (8) zusammensetzt, umfassend:
- einen mit dem vorderen Stromschienenteil (8) verbindbaren ersten Schlitten (30) mit einer Führungsschlitzseite (37), in der ein sich in der Längsrichtung (3) erstreckender Führungsschlitz (39) ausgebildet ist,
- einen mit dem hinteren Stromschienenteil (9) verbindbaren und in einer Querrichtung (4) rechtwinklig zur Fahrtrichtung (3) gesehen neben dem ersten Schlitten (30) angeordneten zweiten Schlitten (31) mit einer an die Führungsschlitzseite (37) des ersten Schlittens (30) angelegten Führungsschlitzseite (37)
**dadurch gekennzeichnet, dass**
in der Führungsschlitzseite (37) des zweiten Schlittens (31) ebenfalls ein sich in der Fahrtrichtung (3) erstreckender Führungsschlitz (39) ausgebildet ist, wobei sich in der Fahrtrichtung (3) gesehen hinter dem Führungsschlitz (3) des ersten Schlittens (30) ein hinteres Formschlusselement (40) und vor dem Führungsschlitz (39) des zweiten Schlittens (31) ein vorderes Formschlusselement (40) anschließt, die in der Querrichtung (4) formschlüssig in den Führungsschlitz (39) des jeweils anderen Schlittens (30, 31) eingreifen.

2. Vorrichtung (13) nach Anspruch 1, wobei die Formschlusselemente (40) in der Fahrtrichtung (3) gesehen an gegenüberliegenden Enden (33, 34) der Schlitten (30, 31) angeordnet sind.

3. Vorrichtung (13) nach Anspruch 1 oder 2, wobei die Formschlusselemente (40) als in den Führungsschlitzen (39) in Querrichtung (4) formschlüssig gehaltene Kulissenelemente (40) ausgeführt sind.

4. Vorrichtung (13) nach Anspruch 3, wobei das hintere Kulissenelement (40) im Führungsschlitz (39) des ersten Schlitten (30) und das vordere Kulissenelement (40) im Führungsschlitz (39) des zweiten Schlittens (31) in der Längsrichtung (4) unbeweglich gehalten ist.

5. Vorrichtung (13) nach Anspruch 3 oder 4, wobei das Kulissenelement (40) einen Doppel-T-Profilquerschnitt besitzt.

6. Vorrichtung (13) nach einem der vorstehenden Ansprüche, wobei an jedem Schlitten (30, 31) der Führungsschlitz (29) ein Formschlussbereich (41) zum Formschluss mit dem Formschlusselement (40) des jeweils anderen Schlittens (31, 30) vorhanden ist, und wobei jeder Formschlussbereich (41) in der Fahrtrichtung (3) gesehen eine Unterbrechung (42) aufweist.

7. Vorrichtung (13) nach Anspruch 6, wobei in jedem Schlitten (30, 31) der Führungsschlitz (39) im Bereich der Unterbrechung (42) entgegen einer Höhenrichtung (6) quer zur Querrichtung (4) und quer zur Fahrtrichtung (3) vertieft (43) ist.

8. Vorrichtung (13) nach Anspruch 6 oder 7, wobei die Unterbrechung (42) in jedem Schlitten (30, 31) kürzer ist, als das in den entsprechenden Führungsschlitz (39) eingreifende Formschlusselement (40).

9. Vorrichtung (13) nach einem der vorstehenden Ansprüche, wobei die Formschlusselemente (40) in den Führungsschlitzen (29) gleitend gelagert sind.

10. Vorrichtung (13) nach einem der vorstehenden Ansprüche, wobei jeder Schlitten (30, 31) in einer Höhenrichtung (6) quer zur Fahrtrichtung (3) und quer zur Querrichtung (4) übereinander angeordnet zwei der Führungsschlitze (29) und zwei der Formschlusselemente (40) umfasst.

## Claims

1. Device (13) for compensating a length change (12) of a current rail (7) extending in a travel direction (3) of a rail vehicle, which consists of a front current rail section (8) seen in the travel direction and a rear current rail section (9) seen in the travel direction behind the front current rail section (8), comprising:
- a first carriage (30) connectable to the front current rail section (8) with a guide slot side (37), in which a guide slot (39) extending in the longitudinal direction (3) is formed,
- a second carriage (31) connectable to the rear current rail section (9) and arranged in a transverse direction (4) at a right angle to the travel direction (3) beside the first carriage (30), with a guide slot side (37) applied to the guide slot side (37) of the first carriage (30),
**characterized in that**
- in the guide slot side (37) of the second carriage (31) a guide slot (39) extending in the travel direction (3) is also formed, with a rear positive locking element (40) following behind the guide slot (39) of the first carriage (30) seen in the travel direction (3) and a front positive locking element (40) preceding the guide slot (39) of the second carriage (31), which positively engage in the guide slot (39) of the respective other carriage (30, 31) in the transverse direction (4).

2. Device (13) according to claim 1, wherein the positive locking elements (40) are arranged at opposite ends (33, 34) of the carriages (30, 31) seen in the travel direction (3).

3. Device (13) according to claim 1 or 2, wherein the positive locking elements (40) are designed as cam elements (40) positively held in the guide slots (39) in the transverse direction (4).

4. Device (13) according to claim 3, wherein the rear cam element (40) is immovably held in the guide slot (39) of the first carriage (30) and the front cam element (40) is immovably held in the guide slot (39) of the second carriage (31) in the longitudinal direction (4).

5. Device (13) according to claim 3 or 4, wherein the cam element (40) has a double T-profile cross-section.

6. Device (13) according to any of the preceding claims, wherein each carriage (30, 31) has a positive locking area (41) in the guide slot (29) for positive locking with the positive locking element (40) of the respective other carriage (31, 30), and wherein each positive locking area (41) has an interruption (42) seen in the travel direction (3).

7. Device (13) according to claim 6, wherein in each carriage (30, 31) the guide slot (39) is deepened (43) in the area of the interruption (42) against a height direction (6) transverse to the transverse direction (4) and transverse to the travel direction (3).

8. Device (13) according to claim 6 or 7, wherein the interruption (42) in each carriage (30, 31) is shorter than the positive locking element (40) engaging in the corresponding guide slot (39).

9. Device (13) according to any of the preceding claims, wherein the positive locking elements (40) are slidingly mounted in the guide slots (29).

10. Device (13) according to any of the preceding claims, wherein each carriage (30, 31) comprises two of the guide slots (29) and two of the positive locking elements (40) arranged one above the other in a height direction (6) transverse to the travel direction (3) and transverse to the transverse direction (4).

## Revendications

1. Dispositif (13) pour compenser un changement de longueur (12) d'un rail conducteur (7) s'étendant dans une direction de déplacement (3) d'un véhicule ferroviaire, qui se compose d'une partie avant du rail conducteur (8) vue dans la direction de déplacement et d'une partie arrière du rail conducteur (9) vue dans la direction de déplacement derrière la partie avant du rail conducteur (8), comprenant :
- un premier chariot (30) pouvant être connecté à la partie avant du rail conducteur (8) avec un côté de fente de guidage (37), dans lequel une fente de guidage (39) s'étendant dans la direction longitudinale (3) est formée,
- un deuxième chariot (31) pouvant être connecté à la partie arrière du rail conducteur (9) et disposé dans une direction transversale (4) perpendiculaire à la direction de déplacement (3) à côté du premier chariot (30), avec un côté de fente de guidage (37) appliqué au côté de fente de guidage (37) du premier chariot (30),
**caractérisé en ce que**
- dans le côté de fente de guidage (37) du deuxième chariot (31) une fente de guidage (39) s'étendant dans la direction de déplacement (3) est également formée, un élément de verrouillage arrière (40) venant derrière la fente de guidage (39) du premier chariot (30) vu dans la direction de déplacement (3) et un élément de verrouillage avant (40) précédant la fente de guidage (39) du deuxième chariot (31), qui s'engagent positivement dans la fente de guidage (39) de l'autre chariot (30, 31) dans la direction transversale (4).

2. Dispositif (13) selon la revendication 1, dans lequel les éléments de verrouillage (40) sont disposés aux extrémités opposées (33, 34) des chariots (30, 31) vues dans la direction de déplacement (3).

3. Dispositif (13) selon la revendication 1 ou 2, dans lequel les éléments de verrouillage (40) sont conçus comme des éléments de came (40) maintenus de manière positive dans les fentes de guidage (39) dans la direction transversale (4).

4. Dispositif (13) selon la revendication 3, dans lequel l'élément de came arrière (40) est maintenu de manière immobile dans la fente de guidage (39) du premier chariot (30) et l'élément de came avant (40) est maintenu de manière immobile dans la fente de guidage (39) du deuxième chariot (31) dans la direction longitudinale (4).

5. Dispositif (13) selon la revendication 3 ou 4, dans lequel l'élément de came (40) a une section transversale en profilé double T.

6. Dispositif (13) selon l'une des revendications précédentes, dans lequel chaque chariot (30, 31) comporte une zone de verrouillage positif (41) dans la fente de guidage (29) pour le verrouillage positif avec l'élément de verrouillage (40) de l'autre chariot (31, 30), et dans lequel chaque zone de verrouillage positif (41) comporte une interruption (42) vue dans la direction de déplacement (3).

7. Dispositif (13) selon la revendication 6, dans lequel dans chaque chariot (30, 31), la fente de guidage (39) est approfondie (43) dans la zone de l'interruption (42) contre une direction de hauteur (6) perpendiculaire à la direction transversale (4) et perpendiculaire à la direction de déplacement (3).

8. Dispositif (13) selon la revendication 6 ou 7, dans lequel l'interruption (42) dans chaque chariot (30, 31) est plus courte que l'élément de verrouillage (40) s'engageant dans la fente de guidage correspondante (39).

9. Dispositif (13) selon l'une des revendications précédentes, dans lequel les éléments de verrouillage (40) sont montés de manière coulissante dans les fentes de guidage (29).

10. Dispositif (13) selon l'une des revendications précédentes, dans lequel chaque chariot (30, 31) comprend deux fentes de guidage (29) et deux éléments de verrouillage (40) disposés l'un au-dessus de l'autre dans une direction de hauteur (6) perpendiculaire à la direction de déplacement (3) et perpendiculaire à la direction transversale (4).
